# FASCICULE DE BREVET EUROPEEN

(11) **EP 3 021 187 B1**
(45) Date de publication et mention de la délivrance du brevet: **14.03.2018**
(21) Numéro de dépôt: 15192645.8
(22) Date de dépôt: 02.11.2015
(51) Int. Cl.: G05B 23/02, B64C 19/00, G01C 23/00, G05D 1/10

(54) **PROCÉDÉ ET DISPOSITIF POUR COMMANDER AU MOINS DEUX SOUS-SYSTÈMES D'UN AÉRONEF**
VERFAHREN UND VORRICHTUNG ZUM STEUERN VON MINDESTENS ZWEI UNTERSYSTEMEN EINES LUFTFAHRZEUGS
METHOD AND A DEVICE FOR CONTROLLING AT LEAST TWO SUBSYSTEMS OF AN AIRCRAFT

(30) Priorité: 14.11.2014 FR 1402563
(43) Date de publication de la demande: 18.05.2016
(73) Titulaire: Airbus Helicopters, 13725 Marignane Cedex (FR)
(72) Inventeur: VIOLETTE, Arnaud, 13127 Vitrolles (FR); BAUDRY, Jean-Pierre, 83200 Toulon (FR)
(74) Mandataire: GPI & Associés

(56) Documents cités:
- US-A1- 2010 161 157
- US-A1- 2011 160 937
- US-A1- 2014 200 747

## Description

La présente invention concerne un procédé et un dispositif pour commander au moins deux sous-systèmes d'un aéronef. L'invention est notamment relative au domaine technique des interfaces de pilotage d'un aéronef de type giravion.

Un giravion peut être décomposé fonctionnellement en une pluralité de sous-systèmes. Par exemple, le giravion comporte des sous-systèmes relatifs respectivement à des commandes de vol, un train d'atterrissage, un phare de recherche, des caméras, un système de radionavigation, un système de navigation, un système de pilotage automatique, des systèmes de visualisation d'informations..

Un sous-système peut comporter des interfaces homme-machine dénommées plus simplement « interface » par la suite.

Une interface dite « interface d'information » permet à un pilote de recevoir des informations de manière visuelle, sonore ou tactile.

Une interface dite « interface de commande » permet à un pilote de commander des organes de l'aéronef.

De plus, un sous-système peut comporter un dispositif actionnable pouvant changer d'état sur requête, un actionneur relié à au moins un dispositif actionnable pour contrôler l'état de ce dispositif actionnable, ou encore un moyen de mesure mesurant au moins un paramètre.

Un dispositif actionnable représente ainsi un organe de l'aéronef pouvant être contrôlé sur requête, tel qu'un phare, un treuil, une caméra ou encore une surface aérodynamique mobile par exemple.

Un actionneur représente alors un organe contrôlant un tel dispositif actionnable suite à une commande. Un actionneur peut ainsi prendre la forme d'une servocommande ou d'un interrupteur par exemple.

Par ailleurs, l'aéronef peut comporter un sous-système de commande de vol.

Ce sous-système de commande de vol comporte des dispositifs actionnables de pilotage pouvant être commandés pour diriger l'aéronef. De tels dispositifs actionnables peuvent comprendre des surfaces aérodynamiques mobiles, des ailes ou des pales de rotors par exemple.

De plus, ce sous-système de commande de vol peut comporter des interfaces pour contrôler ces dispositifs actionnables de pilotage. Par exemple, un giravion peut comporter un manche de commande cyclique pour commander le pas cyclique des pales d'un rotor de sustentation au travers de servocommandes, un levier de pas collectif pour commander le pas collectif des pales d'un rotor de sustentation au travers de servocommandes, un palonnier pour commander un rotor arrière de contrôle du mouvement en lacet du giravion, une manette de gaz pour contrôler une installation motrice entraînant en rotation lesdits rotors.

En outre, l'aéronef peut comporter un sous-système de radiocommunication permettant à un pilote de converser avec des tiers en utilisant les interfaces du sous-système.

L'aéronef peut aussi comporter un sous-système de navigation pour établir une route à suivre, voire pour afficher des informations relatives au vol tel qu'un cap suivi et l'altitude de l'aéronef par exemple.

Des interfaces sont par ailleurs utilisées dans un sous-système de pilotage automatique pour définir par exemple le mode de pilotage à appliquer.

En outre, des sous-systèmes de visualisation permettent à un pilote de surveiller le fonctionnement de l'aéronef. Un sous-système de ce type peut comprendre une jauge de carburant, des instruments de surveillance de l'installation motrice, ou des interfaces affichant des alarmes de dysfonctionnement par exemple.

Cette liste d'interfaces et de sous-systèmes n'est pas exhaustive. Néanmoins, cette liste permet de comprendre qu'un pilote peut avoir une charge de travail importante en vol.

En outre, les aéronefs modernes peuvent offrir à un pilote la possibilité d'effectuer un large éventail de missions. Certaines de ces missions sont potentiellement complexes et augmentent de fait la charge de travail d'un pilote. A titre illustratif, un vol réalisé au milieu d'obstacles et/ou avec une faible visibilité est de nature à compliquer le travail du pilote.

La mise en oeuvre de ces missions peut nécessiter l'utilisation de multiples interfaces, telles que des interfaces affichant des obstacles détectés ou provenant d'une base de données ou des radars affichant les conditions météorologiques par exemple.

Même si les concepteurs d'interfaces homme-machine ont effectué des avancées ergonomiques intéressantes, la charge de travail globale du pilote tend à croître sur des aéronefs modernes en raison du nombre croissant de systèmes à gérer dans un poste de pilotage.

A l'extrême, cette charge de travail peut devenir dangereuse à partir d'un seuil de travail trop important en raison du nombre élevé d'actions à réaliser.

En outre, un manuel de vol peut prévoir de réaliser des actions données selon une séquence donnée durant des phases de vol particulières. Un pilote doit alors mémoriser ces procédures afin de les effectuer selon la séquence prédéterminée à respecter.

En particulier, lorsque l'équipage fait face à un évènement imprévu tel qu'une panne, cet équipage se doit souvent de réagir vite. L'équipage doit donc mémoriser de multiples procédures pour pouvoir réagir rapidement.

De plus, cet apprentissage peut être délicat lorsqu'un équipage vole sur plusieurs aéronefs ayant des procédures différentes à mémoriser.

Par ailleurs, l'aéronef peut en cas de panne se retrouver dans une situation stressante pour le pilote. Une fuite de carburant peut par exemple générer un stress important pour le pilote. Ce pilote doit alors appliquer une procédure prédéterminée sous une contrainte temporelle forte. Dans ce cas, la charge de travail du pilote est susceptible d'atteindre très rapidement un niveau excessif et donc dangereux.

En outre, les interfaces d'un aéronef sont usuellement configurées manuellement par un équipage, selon une séquence d'actions que le pilote est censée connaitre. Par exemple, lorsqu'une mission de recherche est terminée, le pilote reconfigure des interfaces pour avoir à sa disposition l'ensemble des informations lui permettant de rentrer à une base prédéfinie dans les meilleures conditions. Ainsi, le pilote requiert l'affichage, sur les différents écrans de la planche de bord, notamment de la route à suivre ainsi que des informations météorologiques et des informations provenant d'un radar de veille. Eventuellement, le pilote active un système de pilotage automatique afin que l'aéronef suive automatiquement une route programmée.

Si durant ces étapes le pilote commet des erreurs, ces erreurs peuvent s'avérer problématiques. Par exemple, le pilote devrait vérifier la pertinence de la route à suivre au regard de la quantité de carburant restant dans les réservoirs de l'aéronef. Si la quantité de carburant est mal appréhendée, l'aéronef risque de ne pas pouvoir rejoindre la destination prévue.

Par conséquent, la charge de travail d'un pilote en vol est tellement importante que la réalisation de certaines missions complexes implique la présence d'un assistant (pilote ou autre). Toutefois, les différents membres d'équipage doivent coordonner leurs actes, cette coordination impliquant naturellement une charge de travail supplémentaire.

Par suite, un aéronef comprend une pluralité d'interfaces homme-machine mises à la disposition d'au moins un pilote pour la réalisation de missions plus ou moins complexes. Toutefois, l'utilisation de ces interfaces homme-machine peut s'avérer délicate.

Le document US2013/0345920 décrit un système de contrôle autonome d'un aéronef sans pilote. Ce document est donc éloigné du domaine de l'invention.

De même, le document WO2012/161630 a trait à un aéronef sans pilote.

Le document US 2011/160937 décrit un procédé de gestion centralisé.

Ce procédé comporte une étape de création de tâches, une étape d'ordonnancement des tâches, et un étape d'exécution des tâches.

Le document US 2010/161157 concerne un dispositif de gestion de tâches.

Le document US 2014/200747 décrit un dispositif pour la gestion automatique de la configuration et de la reconfiguration de systèmes multiples d'un aéronef.

La présente invention a alors pour objet de proposer un procédé et un dispositif visant à réduire la charge de travail d'un pilote durant certaines phases de vol.

L'invention vise notamment un procédé pour commander des sous-systèmes d'un aéronef, chaque sous-système comportant au moins un organe à choisir dans une liste comprenant au moins : un dispositif actionnable pouvant changer d'état sur requête, un actionneur relié à au moins un dispositif actionnable pour commander l'état de ce dispositif actionnable, un capteur mesurant au moins un paramètre, une interface d'information signalant au moins une information à un individu, une interface de commande apte à commander au moins un autre organe.

Par suite, au cours de ce procédé :
- durant une étape de préparation réalisée au sol ou en vol préalablement à une séquence de commandes, au moins un ordre global est mémorisé dans une base de données, chaque ordre global incluant une condition d'éligibilité spécifiant au moins une condition à réaliser pour pouvoir sélectionner ledit ordre global, au moins un ordre global incluant au moins une condition d'activation, chaque ordre global spécifiant une séquence de commandes comprenant au moins deux actions à réaliser soit séquentiellement soit en parallèle par deux organes différents,
- durant une étape d'initialisation d'une séquence de commandes, un ordinateur de bord détermine si un ordre global mémorisé dit « ordre global sélectionné » est sélectionné automatiquement ou par un acte dit « acte pilote » réalisé par un individu
- si ledit ordre global sélectionné comporte au moins une condition d'activation, durant une étape d'activation de la séquence de commandes, un ordinateur de bord détermine la faisabilité dudit ordre global sélectionné en vérifiant que l'aéronef peut réaliser ledit ordre global sélectionné en déterminant si chaque condition d'activation dudit ordre global sélectionné est remplie,
- durant une étape de réalisation de la séquence de commandes, si ledit ordre global sélectionné est dépourvu de condition d'activation ou si chaque condition d'activation dudit ordre global sélection est remplie, ledit ordinateur de bord réalise lesdites actions spécifiées par ledit ordre global sélectionné.

Selon une variante, chaque ordre global comporte au moins une condition d'activation.

Par exemple, l'aéronef peut comporter au moins un des sous-systèmes suivants : un sous-système d'information permettant de visualiser des informations sur une planche de bord et/ou dans sur un système de visualisation tête haute, un sous-système de commande de vol, un sous-système de pilotage automatique, un sous-système de navigation, un sous-système de radiocommunication, un sous-système de train d'atterrissage, un sous-système de phare, un sous-système d'observation muni d'au moins une caméra.

Dans le cadre de cette invention, des ordres dits « ordres globaux » sont définis. Chaque ordre global est un ordre contextuel, à savoir un ordre dédié à la réalisation d'une fonction de l'aéronef en fonction du contexte. Par suite, un ordre global selon l'invention ne vise pas nécessairement un seul sous-système mais pourra avoir des effets sur des sous-systèmes de nature différents, tels que des sous-systèmes avionique, mécanique, ou d'Interface Homme-Système par exemple.

Lors de l'étape de préparation, une liste d'ordres globaux est établie.

Cette liste peut être établie par le constructeur et / ou par un utilisateur.

Par suite, un pilote peut par exemple définir au moins un ordre global au sol ou encore en vol. Ce pilote manipule ainsi une interface de commande pour mémoriser l'ordre global, une telle interface de commande pouvant comprendre un clavier par exemple.

Chaque ordre global inclut au moins une condition d'éligibilité indiquant dans quelle condition l'ordre global peut être sélectionné par un utilisateur ou encore par un ordinateur de bord.

De plus, l'ordre global inclut une liste d'actions à effectuer de façon séquentielle ou parallèle. Les actions prévues par un même ordre global peuvent être destinées à de multiples organes d'un aéronef, et pas nécessairement à des organes d'un même sous-système. Les actions prévues par un même ordre global comprennent des actions techniques induisant soit une transformation physique d'un organe par le biais de l'affichage d'une image contenant des informations, de l'émission d'un son, ou encore d'une modification de la géométrie d'un actionneur par exemple, soit un déplacement d'un organe.

Par conséquent, chaque action peut agir sur une Interface Homme-Système, un actionneur ou un dispositif actionnable d'un ou plusieurs sous-systèmes.

Une action peut aussi définir quand l'ordre global doit prendre fin.

Au moins un ordre global peut comprendre au moins une condition d'activation indiquant des critères à respecter pour pouvoir réaliser les actions programmées.

Les ordres globaux sont mémorisés dans une base de données embarquée dans l'aéronef.

En outre, lors de la mémorisation d'un ordre global, un ordinateur de bord peut vérifier la faisabilité de cet ordre avant sa mémorisation. Par exemple, un ordre global requérant un vol sur une distance supérieure au rayon d'action de l'aéronef peut être refusé.

Durant une étape d'initialisation, un ordre global mémorisé est sélectionné soit automatiquement par un ordinateur de bord, soit par un « acte pilote ». On entend par « pilote » un membre d'équipage au sens large. On entend par « acte pilote » une intervention manuelle (bouton, écran tactile, dispositif de pointage, ...) ou orale (commande vocale, ...) ou visuelle (désignateur, occulomètre, ...) par exemple, cet acte pilote étant entrepris à l'aide d'une interface de commande.

Dès lors, l'ordinateur de bord surveille une interface de commande pour déterminer si un ordre global est sélectionné, ou sélectionne lui-même un ordre global le cas échéant.

Lorsqu'un ordre global est sélectionné, cet ordre global devient un ordre global sélectionné à traiter.

Si l'ordre global sélectionné est dépourvu de condition d'activation, cet ordre global sélectionné peut être activé sans vérification. Cet ordre global sélectionné est considéré comme étant toujours faisable est peut être dénommé « ordre global activé ».

Par contre, si l'ordre global sélectionné comporte au moins une condition d'activation, l'ordinateur de bord vérifie que chaque condition d'activation est remplie. Dans l'affirmative, l'ordre global sélectionné est faisable.

L'ordinateur de bord vérifie alors si l'aéronef peut réaliser l'ordre global sélectionné en fonction de ses capacités (par exemple quantité carburant estimée supérieure à la quantité carburant disponible, incluant les marges dans les réservoirs), de la météorologie, de la topologie du terrain à survoler, au travers des conditions d'activation de l'ordre global sélectionné.

Des conditions d'activation peuvent donc par exemple inclure une comparaison de la quantité de carburant disponible par rapport à la quantité de carburant nécessaire pour réaliser l'ordre global, une comparaison de conditions météorologiques courantes avec des conditions météorologiques prédéterminées, la vérification d'absences d'interférences entre la trajectoire suivie et le terrain.

Cette vérification peut nécessiter une communication entre l'ordinateur de bord et de multiples organes de l'aéronef pour établir des données et vérifier la faisabilité de l'ordre global. Ces données peuvent inclure des paramètres de vol, une trajectoire, des données météorologiques..

Par exemple, un ordre global peut requérir de suivre une trajectoire située à une altitude donnée. Cet ordre global peut comprendre une condition d'activation consistant à vérifier que ladite altitude donnée est supérieure à l'attitude du terrain survolé. Par conséquent, si une montagne émerge à une altitude supérieure à cette altitude donnée et se situe sur la trajectoire programmée, l'ordinateur de bord conclut que l'ordre global ne peut pas être activé.

Si l'étape d'activation se conclut par la faisabilité d'un ordre global sélectionné muni d'au moins une condition d'activation, cet ordre global sélectionné est dit « ordre global activé ».

Un ordre global faisable est donc un ordre global sélectionné pouvant être réalisé sans mettre en péril l'aéronef et ses occupants. Un ordre global est ainsi activé lorsque cet ordre global est sélectionné automatiquement ou par un pilote, et, lorsque le cas échéant toutes les conditions d'activation sont respectées pour que cet ordre global puisse se dérouler.

Dans le cas où l'ordre global sélectionné ne peut pas être activé en raison de ses conditions d'activation, l'ordinateur de bord en informe l'équipage par le biais d'une interface d'information afin de justifier la non activation de l'ordre global sélectionné. Toutefois, cet ordre global reste sélectionnable pour une activation ultérieure sous réserve que les conditions d'activation soient ultérieurement vérifiées.

Dans le cas où l'ordre global sélectionné est activé, automatiquement en l'absence de condition d'activation ou suite à une vérification des conditions d'activation le cas échéant, l'ordinateur de bord réalise les actions spécifiées selon la séquence mémorisée dans la base de données.

Au titre d'un exemple illustratif, un ordre global peut être configuré lors d'une étape de préparation pour configurer le retour de l'aéronef vers une base. Cet ordre global est dénommé « ordre de retour » par commodité.

Un pilote spécifie que l'ordre de retour peut être sélectionné à tout moment au travers d'une condition d'éligibilité. De plus, le pilote spécifie les conditions d'activation et les coordonnées de la base. Les conditions d'activation peuvent inclure l'élaboration d'une route à suivre et la vérification de la compatibilité de cette route à suivre avec la quantité de carburant stocké dans les réservoirs, les conditions météorologiques et la topologie du terrain à survoler par exemple.

Pour rentrer à sa base, le pilote sélectionne l'ordre de retour via une Interface Homme-Système (commande vocale, écran tactile, ...) parmi une liste d'ordres globaux potentiellement affichés sur une interface d'information de type écran tactile, casque, ..

L'ordinateur de bord évalue alors la faisabilité de l'opération en communiquant avec le sous-système de navigation. Ce sous-système de navigation tente d'élaborer durant l'étape d'activation une trajectoire pouvant être réellement suivie par l'aéronef en prenant en considération le contexte, à savoir l'état de l'aéronef ainsi que la météorologie et le terrain.

Si les conditions d'activation sont remplies, l'ordinateur de bord ordonne l'affichage de la route déterminée précédemment en tenant compte du niveau estimé du carburant dans les réservoirs de carburant, des conditions météorologiques, du relief, des capacités courantes de l'aéronef, etc...

De plus, l'ordinateur de bord peut commander un sous-système de pilotage automatique pour que l'aéronef suive cette trajectoire pour se rendre à sa base en toute sécurité.

A tout moment, le pilote peut toutefois prendre la main par exemple pour modifier la trajectoire de retour, la trajectoire de retour étant soit proposée par un sous-système de navigation à bord de l'aéronef soit établit par un tiers à l'extérieur de l'aéronef et envoyée par liaison de données.

Par suite, ce procédé permet de définir un ordre global donnant naissance à de multiples actions réalisées au moins partiellement automatiquement. Dès lors, le procédé permet de diminuer de façon significative, avant ou durant le vol, la charge de travail d'un pilote.

L'introduction des ordres globaux peut ainsi rendre obsolète l'obligation de mémoriser de manière exhaustive des procédures.

En outre, l'aéronef peut se retrouver dans une situation stressante pour le pilote. Ce procédé permet d'assister le pilote en réalisant automatiquement une série d'actions selon une séquence prédéterminée.

Selon un autre aspect, ce procédé permet la réalisation de procédures qui ne pourraient pas être réalisées par un seul homme. Par suite, des missions réalisées par l'art antérieur avec un équipage composé de plusieurs individus sont susceptibles d'être réalisées par un seul individu en appliquant ce procédé.

Ce procédé peut donc tendre à augmenter la sécurité de l'aéronef dans certaines situations. En effet, les actions réalisées lors de l'étape de réalisation sont exhaustives, ce qui n'est pas toujours le cas lorsqu'un pilote doit réaliser de multiples actions en condition de stress. La mise en oeuvre d'un ordre global selon l'invention tend ainsi à remédier aux incidents provoqués par des erreurs de mémorisation et de réalisation manuelle de procédures.

L'entraînement d'un pilote peut aussi être facilité. En effet, ce pilote n'est alors plus obligé de se souvenir de la liste exhaustive des commandes à réaliser dans un ordre prédéterminé pour de multiples procédures.

De même, le passage d'un aéronef à un autre est facilité. Du point de vue de l'équipage, un ordre global peut être identique d'un aéronef à un autre, les actions réalisées par l'ordre global pour remplir la fonction voulue pouvant être transparentes pour le pilote. Toutefois, du point de vue du système, les séquences d'actions sont potentiellement tout ou partie différentes.

En résumé, un ordre global permet de réaliser automatiquement une séquence d'actions préétablies, qui sont parfois irréalisables par un seul homme.

De plus, l'ordre global peut être initié automatiquement, configuré en fonction du contexte courant de l'aéronef, et éventuellement vérifié lors d'une étape d'activation.

On verra par la suite, que le procédé peut permettre de vérifier le bon déroulement des procédures. En cas d'anomalie durant une procédure, l'équipage peut être alerté. Le procédé peut aussi assister l'équipage pour l'aider à prendre une décision.

Ce procédé peut de plus comporter une ou plusieurs des caractéristiques qui suivent.

Par exemple, au moins un ordre global spécifie une condition d'éligibilité indiquant que l'ordre global est sélectionnable à tout moment.

Un ordre global peut être sélectionné sans prérequis. Par exemple, un ordre global de retour vers une base peut être sélectionné à tout moment.

Selon un autre aspect, durant ladite étape d'initialisation :
- un ordinateur de bord affiche sur une interface d'information une liste d'ordres globaux pouvant être sélectionnés à un instant donné dit « ordres globaux sélectionnables », chaque ordre global sélectionnable étant un ordre global dont chaque condition d'éligibilité est remplie audit instant donné,
- ledit ordinateur de bord surveille une interface de commande pour déterminer ledit ordre global sélectionné, choisi par un pilote parmi la liste d'ordres globaux sélectionnables en manoeuvrant ladite interface de commande.

Cette caractéristique a trait à une sélection non automatique d'un ordre global.

L'ordinateur affiche sur un écran, par exemple tactile, la liste des ordres globaux sélectionnables.

Un ordre global sélectionnable est un ordre global qui peut à un instant donné être choisi par l'équipage. Par définition, tous les ordres globaux ne sont pas sélectionnables à tout moment car ces ordres globaux doivent remplir des conditions de contexte. Par exemple, certains ordres globaux ne sont sélectionnables que pendant certaines phases de vol ou certaines missions.

Un ordre global qui est mémorisé mais non paramétré peut aussi être non sélectionnable.

Par suite, un pilote peut à tout moment sélectionner un ordre global sélectionnable. En effet, seuls les ordres globaux sélectionnables sont présentés au pilote via une interface d'information tel qu'un écran, un casque, des boutons rétroéclairés par exemple.

Le pilote peut alors sélectionner volontairement un ordre global par une interface de commande, tel qu'un bouton mécanique, une commande vocale, un écran tactile, un clavier, une souris notamment.

Toutefois, un ordre global particulier peut aussi être sélectionné automatiquement.

Dès lors, lorsqu'au moins un ordre global dit « ordre global autonome » comprend une condition d'éligibilité spécifiant que cet ordre global peut être sélectionné automatiquement, durant l'étape d'initialisation l'ordinateur de bord sélectionne automatiquement un ordre global autonome lorsque les conditions d'éligibilité de cet ordre global autonome sont remplies.

Par exemple, un pilote mémorise un ordre global de recherche pour programmer des actions à réaliser dans une zone de mission précise. Eventuellement, un pilote requiert le déclenchement de caméras dans une zone de recherche pour observer la faune dans une zone géographique restreinte par exemple.

L'ordinateur de bord surveille alors un système de localisation pour déterminer si l'aéronef arrive dans la zone de recherche, et sélectionne automatiquement l'ordre global de recherche le cas échéant.

Selon un autre aspect, durant l'étape de réalisation, ledit ordinateur de bord peut réaliser chaque action en transmettant un signal à des organes de l'aéronef.

La réalisation d'une action est ainsi requise automatiquement par l'ordinateur de bord.

Néanmoins, durant l'étape de réalisation, l'ordinateur de bord peut réaliser une action en affichant un descriptif de l'action sur une interface d'information pour que le pilote effectue cette action à l'aide d'une interface de commande, ledit ordinateur de bord surveillant lesdits organes pour déterminer si l'action est réalisée afin de poursuivre la séquence de commandes.

L'action est alors réalisée par un pilote sur requête de l'ordinateur de bord. L'ordinateur de bord indique ainsi au pilote quand une action précise doit être réalisée.

Par ailleurs, durant l'étape d'activation, si l'ordre global sélectionné n'est pas faisable en raison de ses conditions d'activation, l'ordinateur de bord contrôle une interface d'information pour en informer un pilote.

L'ordinateur peut aussi mettre fin à la réalisation de l'ordre global. Toutefois, durant l'étape d'activation, si l'ordre global sélectionné n'est pas faisable, l'ordinateur de bord peut déterminer un ordre alternatif faisable et contrôle une interface d'information pour signaler à un pilote ledit ordre alternatif, ledit ordinateur de bord surveillant une interface de commande pour déterminer si un pilote choisit de refuser l'ordre alternatif ou de modifier l'ordre alternatif ou de mettre en oeuvre cet ordre alternatif, ledit ordinateur de bord poursuivant la séquence de commandes en cours sur la base dudit ordre alternatif en cas de validation par le pilote.

Par exemple, un ordre global de retour peut prévoir une route directe vers une base selon une trajectoire rectiligne.

Lors de l'étape d'activation, l'ordinateur de bord peut considérer que cette trajectoire n'est pas réalisable en raison de la présence d'obstacles et ou de mauvaises conditions météorologiques. L'ordinateur de bord le signale au pilote via une interface.

De plus, l'ordinateur de bord peut tenter d'élaborer une trajectoire alternative réalisable contournant un obstacle le cas échéant. A cet effet, l'ordinateur de bord communique avec un sous-système de navigation par le biais d'échanges de signaux. Le cas échéant, cette trajectoire alternative est proposée à un pilote. Ce pilote peut ainsi valider et/ou modifier ou rejeter l'ordre alternatif ainsi réalisé.

Par ailleurs, un pilote peut arrêter à tout moment un ordre global.

Ainsi, l'ordinateur de bord surveille une interface de commande pour déterminer si un pilote requiert l'arrêt d'une séquence de commandes et, dans l'affirmative, met fin à cette procédure de commande. Un pilote peut en effet manoeuvrer une interface de commande pour arrêter une séquence de commandes à tout moment.

En outre, lors de l'étape de réalisation, durant une phase de contrôle, un ordinateur de bord communique avec une interface de surveillance pour déterminer si une panne empêche la réalisation d'une action, et si une dite panne est détectée :
- l'ordinateur de bord contrôle une interface d'information pour informer un pilote de la présence d'une telle panne,
- l'ordinateur de bord surveille au moins une interface de commande pour déterminer si un pilote réalise ladite action ou choisit d'arrêter la séquence de commandes,
- si le pilote réalise ladite action, l'ordinateur de bord poursuit ladite séquence de commandes.

On entend par panne tout événement ou tout état qui empêchera la réalisation correcte et séquentielle d'une action.

Par exemple, une panne est détectée si un train d'atterrissage reste bloqué pendant le déroulement d'un ordre global relatif à la sortie automatique de ce train d'atterrissage. Dans ce cas, l'ordinateur de bord propose à l'équipage soit de réaliser cette action manuellement, soit d'interrompre définitivement l'ordre global.

Dans ce cas, le procédé suggère de proposer à l'équipage de revenir (ou pas) automatiquement à l'état initial avant la réalisation de l'ordre global.

Par ailleurs, l'aéronef se trouvant dans un état initial préalablement à l'étape de réalisation, suite à une interruption d'un ordre global on propose à un individu de remettre l'aéronef dans ledit état initial.

Par ailleurs, un ordre global mémorisé peut comporter des paramètres ajustables. Durant l'étape de préparation, des interfaces de commandes sont manoeuvrées par un pilote pour ajuster lesdits paramètres.

Un tel ordre global ne peut éventuellement pas être sélectionné tant que lesdits paramètres ne sont pas réglés.

En outre, un ordre global mémorisé peut comporter au moins une action à choisir dans une liste comprenant une action optimisant un paramètre de mission, une action reconfigurant au moins partiellement une interface d'information d'un cockpit, une action commandant un dispositif actionnable.

Un ordre global peut aussi tendre à optimiser une mission, par exemple en réduisant le bruit émis par un aéronef.

Néanmoins, un ordre global peut alternativement ou en complément reconfigurer automatiquement et au moins partiellement au moins une interface.

Par exemple, un ordre global peut prévoir l'affichage de formats de symbologie spécifiques sur des écrans, un casque ou tout autre type d'afficheur disponible dans un cockpit.

La disposition et l'affichage de ces différentes informations sont préprogrammés par un opérateur en fonction des différents ordres globaux.

Enfin, un ordre global peut requérir une commande automatique et coordonnée d'un certain nombre d'éléments du véhicule et de l'avionique, afin qu'un giravion soit prédisposé à effectuer une phase de vol requise par une mission par exemple.

Ainsi, la base de données peut comporter un ordre global pour rejoindre un lieu comportant au moins une des actions suivantes :
- une action transmise à un sous-système de navigation requérant le calcul et l'affichage d'une trajectoire à suivre pour rejoindre ledit lieu, en optimisant éventuellement un paramètre de mission,
- une action transmise à un sous-système de commande de vol requérant le calcul d'une consigne de vitesse de rotation d'un rotor,
- une action transmise à un sous-système de commande de vol requérant le calcul d'une consigne de positionnement d'une surface aérodynamique,
- une action transmise à un sous-système de pilotage automatique pour appliquer au moins une desdites consignes de vitesse de rotation et de positionnement en contrôlant au moins un desdits actionneurs,
- une action transmise à une interface d'information pour informer un pilote lorsqu'une trajectoire suivie n'est pas optimale

Des instructions peuvent ainsi être transmises par l'ordinateur de bord par exemple pour conduire un aéronef vers une base en minimisant le bruit émis. Ce bruit peut être réduit en ajustant la vitesse de rotation d'un rotor d'aéronef ou en positionnant de manière adéquate des dérives et des empennages par exemple.

De plus, des modes de fonctionnement d'un sous-système de pilotage automatique peuvent être mis en oeuvre sur ordre de l'ordinateur de bord. Par exemple, un mode de suivi de trajectoire sol peut être enclenché durant un ordre global d'appontage

Ces actions sont éventuellement mises en oeuvre automatiquement durant l'étape de réalisation de l'ordre global associé.

L'ordre global peut en outre agir sur des interfaces de commande d'un pilote pour limiter leur autorité sans empêcher leur manoeuvre au travers de systèmes à retour d'effort, d'affichage de symboles ou d'une émission de sons. Par exemple, des instructions sont donc transmises à une interface d'information pour informer un pilote lorsqu'une trajectoire suivie n'est pas optimale, ou pour éviter l'entrée de l'aéronef dans un domaine de vortex par exemple.

Par ailleurs, un ordre global peut comprendre des actions transmises à une pluralité d'interfaces d'information pour requérir l'affichage :
- des informations d'un radar en mode surveillance anticollisions,
- d'au moins un paramètre relatif à la surveillance du véhicule,
- d'une trajectoire,
- des conditions météorologiques courantes.

Selon un autre aspect, si un ordre global mémorisé nécessite par exemple l'emploi de paramètres variant au cours d'un vol, l'ordinateur de bord détermine ces paramètres même si cet ordre global n'a pas encore été sélectionné lors de ladite étape d'initialisation.

Par ailleurs, un ordre global peut être mis à jour en temps-réel en prévision de sa mise en oeuvre.

Outre un procédé, l'invention vise un aéronef muni de sous-systèmes, chaque sous-système comprenant au moins un organe à choisir dans une liste comprenant au moins : un dispositif actionnable pouvant changer d'état sur requête, un actionneur relié à au moins un dispositif actionnable pour contrôler l'état de ce dispositif actionnable, un capteur mesurant au moins un paramètre, une interface homme-machine de retour de statut signalant au moins une information à un individu, une interface homme-machine de commande apte à générer au moins un ordre destiné à un autre organe.

Cet aéronef comporte alors :
- une base de données mémorisant une liste d'ordres globaux,
- un ordinateur de bord relié à ladite base de données et auxdits organes, ledit ordinateur de bord comportant une unité de traitement mettant en oeuvre ledit procédé décrit précédemment.

Cette unité de traitement peut comporter un moyen de calcul et une mémoire non volatile, ledit moyen de calcul exécutant des instructions mémorisées dans ladite mémoire non volatile pour exécuter le procédé décrit précédemment.

L'invention et ses avantages apparaîtront avec plus de détails dans le cadre de la description qui suit avec des exemples donnés à titre illustratif en référence aux figures annexées qui représentent :
- la figure 1, un schéma illustrant un aéronef selon l'invention,
- la figure 2, un schéma illustrant un ordinateur de bord appliquant le procédé selon l'invention,
- la figure 3 un schéma illustrant une étape de préparation et une étape d'initialisation selon l'invention,
- la figure 4, un schéma illustrant une étape de réalisation, et
- la figure 5, un schéma illustrant l'exécution d'un ordre global.

Les éléments présents dans plusieurs figures distinctes sont affectés d'une seule et même référence.

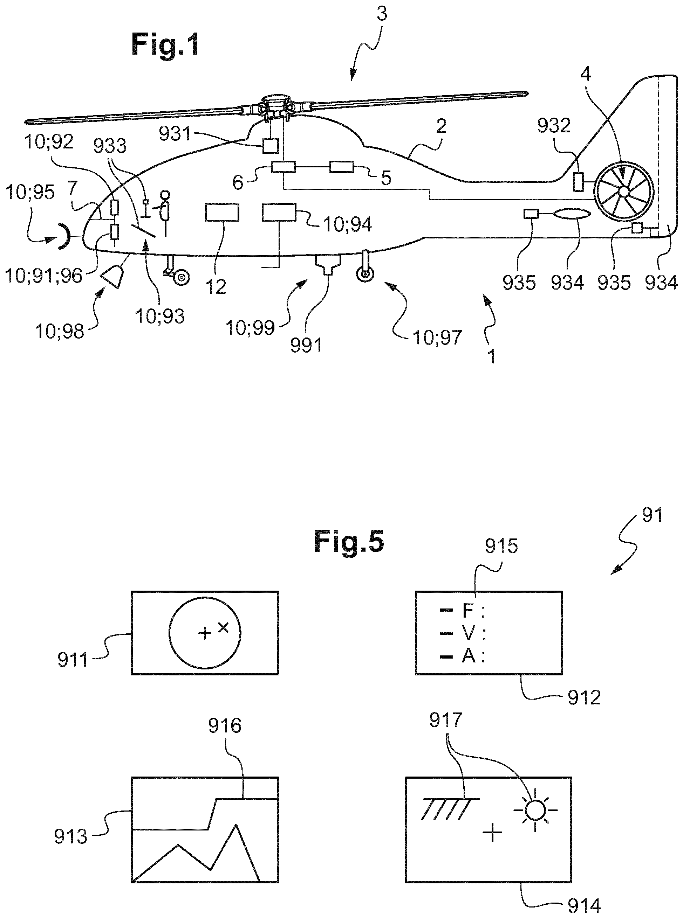

La figure 1 illustre un aéronef 1 selon l'invention de manière schématique.

L'aéronef 1 comporte un fuselage 2 s'étendant longitudinalement d'un nez vers une extrémité arrière. Par ailleurs, l'aéronef 1 peut être un giravion muni d'au moins un rotor principal 3 porté par le fuselage 2.

De plus, l'aéronef 1 peut comprendre un rotor de contrôle du mouvement en lacet 4 agencé au niveau de la queue du giravion. Un tel rotor est dénommé plus simplement rotor arrière en raison de son agencement au niveau de l'extrémité arrière de l'aéronef.

Les rotors sont mis en rotation par une installation motrice. Par exemple, cette installation motrice comporte au moins un moteur 5. Ce moteur 5 est alors relié à au moins un rotor par une boîte de transmission de puissance 6 principale.

Par ailleurs, l'aéronef 1 comporte de multiples sous-systèmes 10 pour assurer son fonctionnement.

Parmi ces sous-systèmes 10, l'aéronef comporte en particulier un sous-système de commande de vol 93. Ce sous-système de commande de vol 93 peut comporter des dispositifs actionnables 931, 932 aptes à modifier le pas des pales des rotors, ces dispositifs actionnables 931, 932 comprenant des servocommandes par exemple reliées à des commandes 933.

De plus, l'aéronef peut comporter des dispositifs actionnables 934 de type surfaces aérodynamiques mobiles, ces surfaces aérodynamiques pouvant inclure un empennage et/ou une dérive par exemple.

Dès lors, le sous-système de commande de vol 93 est pourvu d'actionneurs 935 commandant ces dispositifs actionnables 934.

L'aéronef peut en outre comporter un sous-système de pilotage automatique 94 relié au sous-système de commande de vol. Un tel sous-système de pilotage automatique 94 comprend par exemple un calculateur appliquant des lois de pilotage pour commander des actionneurs relié au sous-système de commande de vol 93.

Par ailleurs, l'aéronef peut comprendre un sous-système d'information 91 permettant de visualiser des informations sur une planche de bord 7 et/ou dans sur un système de visualisation tête haute 92.

Par exemple, un sous-système d'information comporte un panneau apte à signaler des pannes à un pilote.

L'aéronef peut aussi comprendre un sous-système de navigation 95 ayant pour fonction de diriger l'aéronef, par exemple en fournissant la trajectoire suivie par l'aéronef, une trajectoire à suivre, l'altitude de l'aéronef... Un tel sous-système de navigation 95 peut comprendre de multiples équipements et par exemple un radar.

L'aéronef comprend en outre un sous-système de radiocommunication 96 comprenant une radio par exemple.

Un sous-système de train d'atterrissage 97 peut être aussi porté par le fuselage.

Par ailleurs, un sous-système de phare 98 peut comprendre au moins un phare pour éclairer une cible, et un sous-système d'observation 99 est muni d'au moins une caméra 991 pour réaliser des vidéos ou des photos.

Des sous-systèmes peuvent en outre comprendre des organes communs. Par exemple, un écran multifonction connu sous l'expression « Multi Function Display » en langue anglaise peut afficher des informations relatives à plusieurs sous-systèmes et peut commander des organes de plusieurs sous-systèmes.

L'aéronef 1 est par ailleurs pourvu d'un ordinateur de bord 12 pour mettre en oeuvre le procédé selon l'invention.

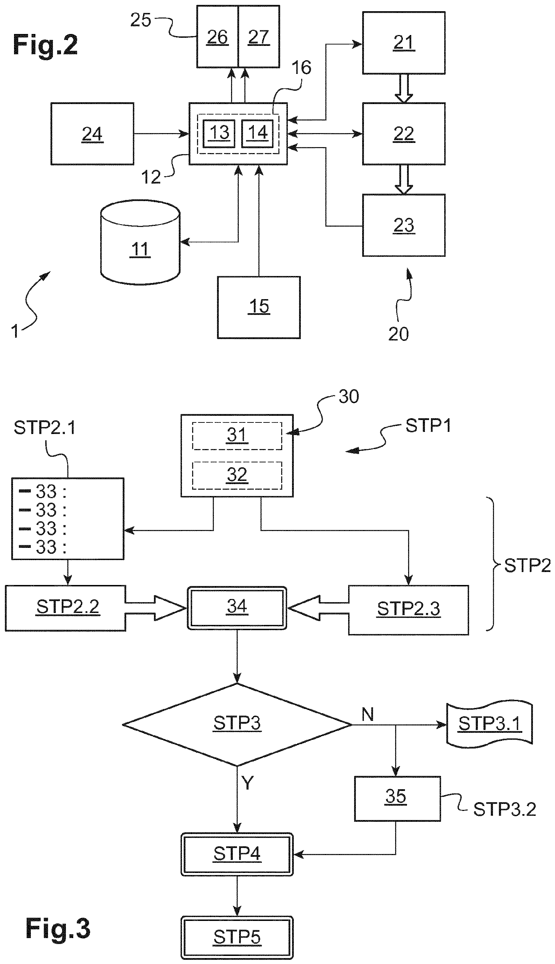

En référence à la figure 2, l'ordinateur de bord 12 est muni d'au moins une unité de traitement 16.

Cette unité de traitement a pour fonction de mettre en oeuvre le procédé selon l'invention. A cet effet, l'unité de traitement peut être d'un type usuel.

Par exemple, l'unité de traitement 16 peut comprendre un moyen de calcul 13 de type processeur ou microprocesseur. Dès lors, l'unité de traitement 16 inclut une mémoire non volatile 14 stockant des informations exécutables par le moyen de calcul 13. L'unité de traitement peut aussi comporter une mémoire volatile stockant des valeurs temporaires de paramètres par exemple.

L'ordinateur de bord est par ailleurs relié à une base de données 11 pour mémoriser des informations sur cette base de données 11 et/ou utiliser des informations stockées dans cette base de données 11. La base de données peut comprendre au moins un fichier. De même l'expression « base de données » fait référence à une unique base de données, ou encore à un ensemble de base de données.

De plus, l'ordinateur de bord 12 est relié à une pluralité d'organes 20 d'une pluralité de sous-systèmes 10. Cet ordinateur de bord peut alors générer des signaux de sortie pour commander chaque organe 20 relié à cet ordinateur de bord 12. De plus, l'ordinateur de bord reçoit des signaux d'entrée provenant de certains organes. Ces signaux peuvent être porteurs des données de toutes sortes et d'instructions de toutes sortes.

En particulier, l'ordinateur de bord est relié à au moins un organe 20 à choisir dans une liste comprenant au moins un dispositif actionnable 22 pouvant changer d'état sur requête et un actionneur 21 relié à au moins un dispositif actionnable 22 pour contrôler l'état de ce dispositif actionnable. Cette liste est dite « liste d'organes » par commodité.

De tels actionneurs incluent notamment les actionneurs 933 du sous-système de commande de vol 93.

Un dispositif actionnable 22 peut être une pale d'un rotor ou encore une surface aérodynamique mobile, un actionneur pouvant par exemple être une servocommande engendrant le déplacement d'un dispositif actionnable. Un dispositif actionnable peut aussi être un robinet, une valve, un doseur de carburant, un essuie-glace, un train d'atterrissage, un phare, une caméra, un extincteur, un treuil...

Cette liste d'organe peut aussi comprendre des capteurs 23 mesurant au moins un paramètre. Un capteur peut être un capteur en tant que tel ou plus globalement un système de mesure. Un capteur 23 peut par exemple prendre la forme d'un système anémobarométrique, d'un capteur de givre, d'un capteur de température, d'un capteur de pluie, de système de mesure de vitesse ou de couple, d'une jauge de carburant, d'un système de mesure d'une tension électrique ou d'une intensité électrique, un système déterminant la position d'une partie mobile..

Par ailleurs, la liste d'organes peut comprendre des interfaces d'information 25 signalant au moins une information à un individu. Une interface d'information peut comprendre un dispositif de signalisation visuelle ou sonore ou encore un système haptique.

L'expression « interface d'information » englobe des interfaces 26 affichant le statut d'organes mais aussi des interfaces affichant des informations diverses 27.

Enfin, la liste d'organes comporte des interfaces de commande 24 qui génèrent au moins un ordre destiné à un autre organe. Une telle interface de commande peut comprendre un levier de pas collectif, un manche cyclique, un bouton manoeuvrable manuellement, un système de commande vocal, un désignateur de type souris ou équivalent, un clavier..

Par ailleurs, l'ordinateur de bord peut être relié à une interface de surveillance 15 déterminant la présence de pannes. Une telle interface de surveillance représente alors une interface d'information dédiée à la détermination de panne.

On se référera à la littérature pour obtenir des informations relatives aux divers organes décrits précédemment.

Cette architecture permet de mettre en oeuvre le procédé selon l'invention.

En référence à la figure 3, ce procédé inclut notamment une étape de préparation STP1.

Durant l'étape de préparation STP1, au moins un ordre global 30 est mémorisé dans la base de données 11.

La mémorisation peut être effectuée par le constructeur.

Néanmoins, un pilote peut manoeuvrer une interface de commande pour programmer un ordre global au sol ou en vol et le mémoriser dans la base de données.

Eventuellement, un ordre global peut être préprogrammé partiellement. Par suite, un tel ordre global comprend des paramètres devant être programmés par le pilote au sol ou en vol.

Par exemple, un ordre global peut être relatif à la mise en oeuvre d'une procédure d'atterrissage. Toutefois, la zone d'atterrissage et la trajectoire à suivre peuvent ne pas être programmées. Un pilote doit alors mémoriser cette zone d'atterrissage avant de pourvoir utiliser un tel ordre global.

Chaque ordre global comporte au moins une condition d'éligibilité mémorisée dans la base de données. Cette condition d'éligibilité a pour fonction d'indiquer quand l'ordre global peut être sélectionné.

Une condition d'éligibilité spécifie par exemple que l'ordre global peut uniquement être sélectionné durant une phase de vol de croisière.

Un autre type de condition d'éligibilité spécifie que l'ordre global peut être sélectionné à tout moment.

Par suite, une condition d'éligibilité peut indiquer si un ordre global est sélectionnable à tout moment, et à défaut quand l'ordre global peut être sélectionné.

En outre, une condition d'éligibilité peut indiquer si un ordre global est un ordre dit « ordre à sélectionner 31 » par commodité. Un tel ordre à sélectionner doit être sélectionné via un acte pilote pour être mis en oeuvre.

De manière alternative, une condition d'éligibilité peut indiquer si un ordre global est un ordre dit « ordre global autonome 32 » par commodité. Un tel ordre global autonome indique si l'ordre global peut être sélectionné automatiquement par l'ordinateur de bord lorsque toutes les conditions d'éligibilité sont remplies.

Par ailleurs, au moins un ordre global comporte au moins une condition d'activation mémorisée dans la base de données. Cette condition d'activation a pour fonction d'indiquer quand l'ordre global peut être activé. Un ordre global dépourvu de condition d'activation peut donc être activé sans vérification préalable.

Un ordre global peut être impossible à réaliser en fonction de conditions contextuelles à un instant donné. Une telle condition contextuelle inclut par exemple la phase de vol courante de l'aéronef. Une condition d'activation peut alors indiquer qu'un ordre global ne peut pas être activé durant une phase de décollage. A titre d'exemple, le treuillage d'un individu peut être interdit au décollage.

Une condition contextuelle peut aussi être relative à l'état de l'aéronef. Par exemple, un ordre global peut être interdit lorsqu'un giravion bimoteur comporte un moteur en panne. Selon un autre exemple, un ordre global peut être impossible à mettre en oeuvre en raison de la quantité de carburant disponible.

Par ailleurs, une condition contextuelle peut être relative aux conditions météorologiques.

Enfin, une condition contextuelle peut prendre en considération l'état du pilote.

Par ailleurs, un ordre global comporte une séquence de commandes mémorisée dans la base de données. Cet ordre global comprend au moins deux actions 50 à réaliser l'une après l'autre par deux d'organes différents.

Une action représente au moins une commande devant être transmise par l'ordinateur de bord à un organe.

Au moins une action peut être choisie dans une liste dite « liste d'actions » par commodité, éventuellement mémorisée dans la base de données.

Une telle liste d'actions comprend une action optimisant un paramètre de mission. Par exemple, une telle action vise à déterminer une trajectoire minimisant le bruit émis par l'aéronef.

La liste d'actions peut comprendre une action reconfigurant au moins partiellement une interface d'information d'un cockpit. Un ordre global peut requérir l'affichage de données particulières sur au moins un système d'affichage.

Cette liste d'actions peut aussi comprendre une action commandant un dispositif actionnable, par le biais d'une commande transmise à un actionneur le cas échéant.

Par exemple, un ordre global permet de rejoindre un lieu en appliquant au moins une des actions suivantes :
- une action transmise à un sous-système de navigation requérant le calcul et l'affichage d'une trajectoire à suivre pour rejoindre ledit lieu en optimisant un paramètre de mission,
- une action transmise à un sous-système de commande de vol 93 requérant le calcul d'une consigne de vitesse de rotation d'un rotor et / ou le calcul d'une consigne de positionnement d'une surface aérodynamique,
- une action transmise à un sous-système de pilotage automatique 94 pour appliquer au moins une desdites consignes de vitesse de rotation et de positionnement en contrôlant au moins un desdits actionneurs 21,

- une action transmise à une interface d'information 25 pour informer un pilote lorsqu'une trajectoire suivie n'est pas optimale.

La figure 5 illustre un ordre global comprenant des actions transmises à une pluralité d'interfaces d'information. L'ordinateur de bord transmet des signaux à ces interfaces pour requérir l'affichage :
- des informations d'un radar en mode surveillance anticollisions 911 sur un premier écran,
- d'au moins un paramètre 915 relatif à la surveillance du véhicule sur un deuxième écran 912,
- d'une trajectoire 916 à suivre sur un troisième écran 913,
- des conditions météorologiques courantes sous la forme de symboles 917 affichés sur un quatrième écran 914.

En référence à la figure 3, une séquence de commandes peut être réalisée au sol ou en vol.

Dès lors, durant une étape d'initialisation STP2 mis en oeuvre par l'ordinateur de bord, on détermine si un ordre global est sélectionné automatiquement ou via un acte pilote. Suite à sa sélection, un tel ordre global est dit « ordre global sélectionné 34 » par commodité.

La sélection manuelle d'un ordre global comprend une phase d'affichage STP2.1. Durant cette phase d'affichage STP2.1, on affiche sur une interface d'information les ordres globaux pouvant être sélectionnés. Ainsi, l'ordinateur de bord affiche sur une interface d'information les ordres globaux pouvant être sélectionnés.

A cet effet, l'ordinateur de bord analyse les conditions d'éligibilité des ordres globaux mémorisés. Le cas échéant, l'ordinateur de bord communique avec des organes de l'aéronef pour déterminer si les conditions d'éligibilité de chaque ordre global sont remplies. Dans l'affirmative, ces ordres globaux deviennent des ordres globaux dit « ordres globaux sélectionnables 33 ».

Un ordre global comprenant des paramètres à ajuster ne peut éventuellement pas être sélectionné tant que lesdits paramètres ne sont pas paramétrés par un individu.

Durant une phase de sélection manuelle STP2.2, un pilote peut alors sélectionner via un acte pilote un des ordres globaux sélectionnables. Par suite, l'ordinateur de bord 12 surveille une telle interface de commande 24 pour déterminer le cas échéant l'ordre global sélectionné 34.

La sélection automatique d'un ordre global est effectuée lors d'une phase automatique STP2.3.

Si les conditions d'éligibilité d'un ordre global autonome sont remplies, on sélectionne automatiquement cet ordre global autonome. En particulier, l'ordinateur de bord sélectionne automatiquement cet ordre global autonome.

Lorsqu'un ordre global muni d'au moins une condition d'activation est sélectionné, on détermine durant une étape d'activation STP3 si cet ordre global sélectionné peut être activé.

Par suite, l'ordinateur de bord détermine, le cas échéant en consultant au moins un organe de l'aéronef, si les conditions d'activation contextuelles de l'ordre global sélectionné sont toutes remplies.

Dans la négative, l'ordinateur de bord peut informer le pilote durant une phase d'informations STP 3.1. L'ordinateur de bord transmet alors un signal à une interface d'information pour signaler que l'activation ne peut pas avoir lieu. L'ordinateur de bord peut requérir l'affichage d'un message précisant la raison pour laquelle l'ordre global sélectionné n'est pas activé.

Durant une phase de proposition STP3.2, si l'ordre global sélectionné 34 n'est pas faisable, l'ordinateur de bord 12 détermine si possible un ordre alternatif 35.

Par exemple, un ordre global mémorisé peut spécifier des actions à réaliser si les conditions d'activation ne sont pas réunies.

L'ordinateur de bord contrôle alors une interface d'information 25 pour signaler à un pilote l'ordre alternatif 35. Cet ordinateur de bord 12 surveille alors une interface de commande 24 pour déterminer si un pilote choisit de refuser l'ordre alternatif 35 ou de modifier l'ordre alternatif 35 ou encore de mettre en oeuvre cet ordre alternatif 35. L'ordinateur de bord 12 poursuit la séquence de commandes en cours sur la base de l'ordre alternatif en cas de validation de cet ordre alternatif par le pilote.

Si un ordre global est activé, l'ordinateur de bord débute alors une étape de réalisation STP4.

Lorsqu'un ordre global sélectionné ne spécifie aucune condition d'activation, cet ordre global sélectionné est forcément faisable et peut être validé automatiquement. Par suite, l'étape d'activation STP3 n'est pas nécessaire. L'ordinateur de bord peut alors débuter l'étape de réalisation STP4 après l'étape d'initialisation STP2

Toutefois, le procédé peut prévoir de vérifier que l'ordre global sélectionné ne spécifie aucune condition d'activation.

Dès lors, durant cette étape d'activation, on détermine si l'ordre global sélectionné ne spécifie aucune condition d'activation.

Dans l'affirmative on active l'ordre global sélectionné et on entame l'étape de réalisation STP4.

Dans la négative, on vérifie la faisabilité des conditions d'activation selon la procédure précédente.

Par suite, lorsque l'ordre global sélectionné ou le cas échéant l'ordre global alternatif est validé, l'ordinateur de bord débute une étape de réalisation STP4. On réalise alors les actions spécifiées par l'ordre global considéré.

Par exemple, un ordre global de retour à la base est réalisé. Cet ordre global peut prévoir des conditions d'activation relatives à la présence d'obstacles ou de conditions météorologiques adéquates par exemple.

Si les conditions d'activation ne sont pas remplies pour effectuer un retour à la base, l'ordinateur de bord en informe le pilote. Cet ordinateur de bord exécute une action alternative pour proposer une route à suivre afin d'atteindre un point de posé en toute sécurité. L'équipage peut alors valider et/ou modifier ou rejeter cette route à suivre.

Si les conditions d'activation sont remplies, l'ordinateur de bord commande au moins une interface d'information pour proposer une route de retour vers la base tenant compte du niveau estimé de carburant dans les réservoirs de carburant, des conditions météorologiques, du relief, des capacités courantes de l'aéronef. Cette proposition de trajectoire retour est éventuellement à modifier ou valider par le pilote par le biais d'une action dédiée.

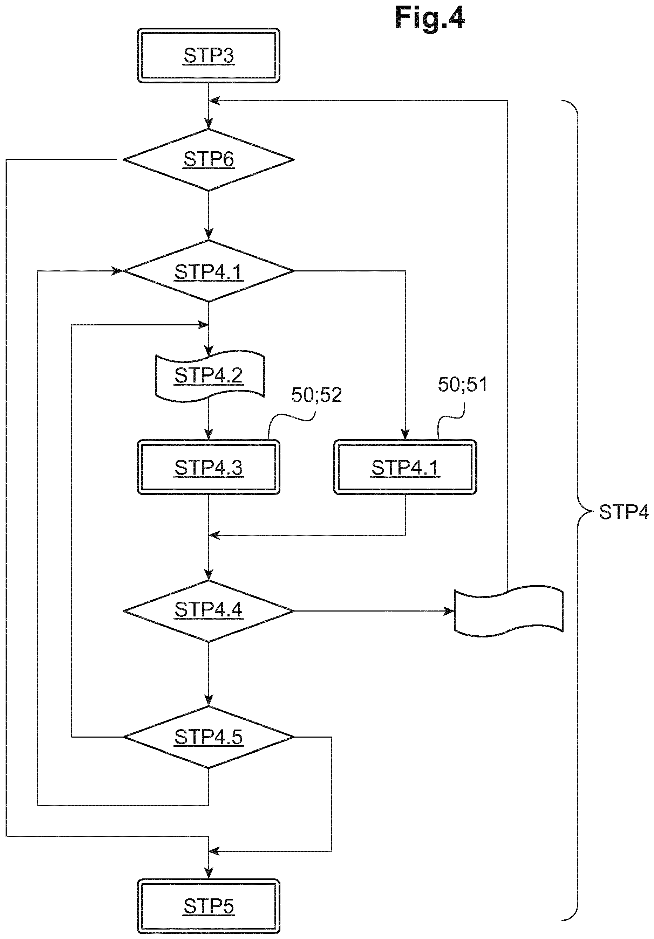

En référence à la figure 4, durant l'étape de réalisation STP4, l'ordinateur de bord 12 réalise les actions 50 spécifiées par l'ordre global sélectionné 34, suivant la séquence mémorisée.

Les actions mémorisées peuvent comprendre deux types d'actions : les actions réalisables automatiquement, et les actions réalisables via un acte d'un individu.

Une action réalisable automatiquement comprend donc des instructions indiquant à l'ordinateur de bord les commandes à transmettre à un organe.

Dès lors, durant une phase STP4.1, l'ordinateur de bord transmet au moins un signal à au moins un organe pour réaliser une telle action 51.

Par exemple, en exécutant un ordre global et notamment l'ordre global de retour à la base, l'ordinateur de bord contrôle des interfaces pour afficher la représentation d'un radar en mode surveillance anticollision, des paramètres relatifs à la surveillance du véhicule, une route sécurisée, les conditions météorologiques courantes. Des modes de pilotage par objectif du système de pilotage automatique peuvent aussi être mis en oeuvre automatiquement pour que l'aéronef suive ladite route.

Par contre, une action réalisable via un acte pilote comprend donc des instructions indiquant à l'ordinateur de bord d'afficher sur une interface d'information l'action à réaliser.

Dès lors, durant une phase STP4.2, l'ordinateur de bord signale à un pilote l'action 52 à réaliser. Par exemple, l'ordinateur de bord requiert l'affichage d'un message sur un écran.

Durant une phase STP4.3, le pilote effectue alors ladite action 52. Eventuellement, le pilote en informe l'ordinateur de bord en manoeuvrant un organe de l'aéronef. Alternativement, l'ordinateur de bord surveille le fonctionnement d'au moins un organe pour déterminer si ladite action est réalisée.

Lorsqu'une action est terminée, l'ordinateur de bord traite l'action suivante de l'ordre global sélectionné, jusqu'à atteindre la fin de la séquence STP5.

Eventuellement, durant une phase de contrôle STP4.4, un ordinateur de bord 12 communique avec une interface de surveillance 15 pour déterminer si une panne empêche la réalisation d'une action.

Lorsqu'une panne est détectée, l'ordinateur de bord 12 contrôle une interface d'information 25 pour signaler la panne à un pilote. Dès lors, l'ordinateur de bord 12 surveille au moins une interface de commande 24 pour déterminer si un pilote réalise l'action concernée ou choisit d'arrêter la séquence de commandes. Si le pilote réalise cette action, l'ordinateur de bord 12 poursuit la séquence de commandes.

Par ailleurs, durant une phase d'annulation volontaire STP6, un pilote peut arrêter à tout moment l'exécution d'un ordre global. Cette phase d'annulation volontaire STP6 est schématisée en haut de la figure 4 mais peut se produire à tout moment, notamment lors de l'étape d'activation. Par suite, l'ordinateur de bord 12 surveille une interface de commande 24 pour déterminer si un pilote requiert l'arrêt d'une séquence de commandes.

Par ailleurs, un ordre global mémorisé peut comprendre des actions, des conditions d'éligibilité ou des conditions d'activation nécessitant l'emploi de paramètres variant au cours d'un vol, tel que la vitesse d'avancement de l'aéronef par exemple.

Par suite, l'ordinateur de bord 12 peut déterminer en permanence la valeur de ces paramètres, éventuellement en communiquant avec divers organes de l'aéronef, même si cet ordre global n'a pas encore été mis en oeuvre lors d'une étape de réalisation.

A titre illustratif, un pilote peut programmer avant le vol un ordre global de décollage, un ordre global de vol en croisière vers une destination, et un ordre global d'atterrissage.

L'ordre global de décollage est par exemple un ordre qui comprend des paramètres ajustables. Ces paramètres incluent éventuellement la nature de la zone de décollage et une route à suivre suite au décollage.

De plus, cet ordre global de décollage comporte une condition d'éligibilité. Cette condition d'éligibilité spécifie par exemple un pas collectif des pales d'un rotor à atteindre au sol pour que l'ordre global de décollage soit sélectionné automatiquement.

L'ordre global de décollage spécifie en outre des conditions d'activation. Ainsi, l'ordre global de décollage peut être activé en l'absence de panne critique si la puissance pouvant être fournie par des moteurs est supérieure à un seuil, si le vent est compris dans un domaine de vent spécifié par le constructeur, et si le centrage de l'aéronef est conforme à des exigences du constructeur par exemple.

En outre, cet ordre global de décollage spécifie des actions visant à configurer automatiquement de multiples afficheurs de bord (écrans, casque, ..) pour permettre à l'équipage de surveiller le décollage automatique de l'appareil. Des actions prévoient par exemple l'affichage d'une trajectoire à suivre sur un organe connu sous l'acronyme HMS/S, l'affichage d'un point de décision dit « TDP » et de son franchissement...

De plus, une action est relative à la rétraction d'un train d'atterrissage dans une case de train. Une autre action peut comprendre l'extinction d'un phare d'atterrissage.

L'ordre global de croisière peut spécifier une condition d'éligibilité indiquant une sélection automatique dès qu'au moins un paramètre atteint un seuil. Par exemple, l'ordre global est enclenché à partir d'une vitesse d'avancement seuil et/ ou d'une altitude seuil de l'aéronef.

Cet ordre global de croisière peut comprendre une condition d'activation, telle que l'absence de panne critique par exemple.

Enfin, l'ordre global de croisière peut comprendre des actions pour établir une trajectoire jusqu'à une destination. De plus, des actions peuvent viser à reconfigurer des afficheurs pour permettre à l'équipage de suivre le plan de vol actif. Des actions sont par exemple destinées à un système de pilotage automatique pour que l'aéronef suive automatiquement cette trajectoire, éventuellement en respectant des écarts limites latéral et vertical par rapport à la trajectoire à suivre.

L'ordre global d'atterrissage peut spécifier une condition d'éligibilité indiquant que l'ordre peut être déclenché à tout moment suite au paramétrage de la destination.

Dès lors, le pilote mémorise au sol ou en vol cette destination ce qui rend l'ordre global sélectionnable.

Cet ordre global d'atterrissage peut n'être associé à aucune condition d'activation.

Enfin, l'ordre global d'atterrissage peut comprendre les actions suivantes :
- calcul puis affichage d'une trajectoire optimale (consigne de vitesse et profil vertical à suivre) jusqu'au point de posé,
- calcul et suivi d'une consigne de vitesse de rotation du rotor principal,
- calcul et positionnement optimal d'une dérive et/ou d'un empennage,
- limitation sans les en empêcher de manoeuvres susceptibles de conduire l'aéronef dans des conditions d'entrée en vortex, par exemple par le biais de retour haptique dans des commandes de vol,
- sortie du train d'atterrissage.

Par suite, le pilote paramètre par exemple au sol un ordre global de décollage du type dit « décollage ponctuel de catégorie A ». L'ordinateur de bord sollicite alors le système de navigation pour calculer la position d'un point de décision de décollage TDP et une trajectoire de décollage. L'ordre global comporte alors une action consistant à suivre ladite trajectoire notamment. Le pilote vérifie ces données et mémorise l'ordre global.

Une fois tous les paramètres ajustés, le pilote manoeuvre l'aéronef pour rouler jusqu'à la position de décollage. Après avoir reçu l'autorisation de décollage de la tour de contrôle, le pilote tire légèrement sur le levier de pas collectif pour décoller. L'ordre global de décollage est alors automatiquement sélectionné.

L'ordinateur de bord vérifie ensuite que tous les critères d'activation sont réunis pour activer cet ordre global de décollage.

Dans l'affirmative, l'ordinateur de bord réalise les actions spécifiées dans l'ordre global de décollage en configurant automatiquement les différents afficheurs pour permettre à l'équipage de surveiller le décollage. L'équipage peut ainsi à tout moment visualiser où se situe le point de décision de décollage TDP par rapport à la manoeuvre actuelle. De plus, la rentrée du train d'atterrissage et l'extinction du phare d'atterrissage s'effectuent le cas échéant automatiquement et au moment requis.

Lorsque le déroulement de cet ordre global de décollage est terminé, l'ordre global de croisière s'enclenche automatiquement, les critères d'éligibilité de cet ordre global de croisière étant réunis. L'ordinateur réalise alors les diverses actions de cet ordre global de croisière pour reconfigurer les différents afficheurs afin de permettre à l'équipage de suivre le plan de vol actif. De plus, le système de pilotage contrôle l'aéronef.

A l'approche de sa destination, le pilote sélectionne l'ordre global d'atterrissage. L'ordinateur de bord met alors en oeuvre les diverses actions spécifiées

En particulier, l'ordinateur de bord commande un actionneur pour sortir le train d'atterrissage le cas échéant.

Si le train d'atterrissage reste bloqué pendant le déroulement des actions de l'ordre global d'atterrissage, l'ordinateur de bord signale ce défaut à un pilote en contrôlant une interface. Le pilote a alors la possibilité de sortir manuellement le train d'atterrissage ou d'interrompre l'ordre global.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Procédé pour commander des sous-systèmes (10) d'un aéronef (1), chaque sous-système (10) comportant au moins un organe (20) à choisir dans une liste comprenant au moins : un dispositif actionnable (22) pouvant changer d'état sur requête, un actionneur (21) relié à au moins un dispositif actionnable (22) pour commander l'état de ce dispositif actionnable (22), un capteur (23) mesurant au moins un paramètre, une interface d'information (25) signalant au moins une information à un individu, une interface de commande (24) apte à commander au moins un autre organe (20), **caractérisé en ce que** :
- durant une étape de préparation (STP1) réalisée au sol ou en vol préalablement à une séquence de commandes, au moins un ordre global (30) est mémorisé dans une base de données (11), chaque ordre global (30) incluant une condition d'éligibilité spécifiant au moins une condition à réaliser pour pouvoir sélectionner ledit ordre global (30), au moins un ordre global (30) incluant au moins une condition d'activation, chaque ordre global (30) spécifiant une séquence de commandes comprenant au moins deux actions (50) à réaliser soit séquentiellement soit en parallèle par deux organes différents,
- durant une étape d'initialisation (STP2) d'une séquence de commandes, un ordinateur de bord (12) détermine si un ordre global (30) mémorisé dit « ordre global sélectionné (34) » est sélectionné automatiquement ou par un acte dit « acte pilote » réalisé par un individu,
- si ledit ordre global sélectionné comporte au moins une condition d'activation, durant une étape d'activation (STP3) de la séquence de commandes, un ordinateur de bord (12) détermine la faisabilité dudit ordre global sélectionné (34) en vérifiant que l'aéronef (1) peut réaliser ledit ordre global sélectionné (34) en déterminant si chaque condition d'activation dudit ordre global sélectionné (34) est remplie,
- durant une étape de réalisation (STP4) de la séquence de commandes, si ledit ordre global sélectionné (34) est dépourvu de condition d'activation ou si chaque condition d'activation dudit ordre global sélection est remplie, ledit ordinateur de bord (12) réalise lesdites actions (50) spécifiées par ledit ordre global sélectionné (34).

2. Procédé selon la revendication 1,
**caractérisé en ce qu'**au moins un ordre global (30) spécifie une condition d'éligibilité indiquant que l'ordre global est sélectionnable à tout moment.

3. Procédé selon l'une quelconque des revendications 1 à 2,
**caractérisé en ce que** durant ladite étape d'initialisation (STP2) :
- ledit ordinateur de bord (12) affiche sur une interface d'information (25) une liste d'ordres globaux pouvant être sélectionnés à un instant donné dit « ordres globaux sélectionnables (33) », chaque ordre global sélectionnable (33) étant un ordre global dont chaque condition d'éligibilité est remplie audit instant donné,
- ledit ordinateur de bord (12) surveille une interface de commande (24) pour déterminer ledit ordre global sélectionné (34) choisi par un pilote parmi la liste d'ordres globaux sélectionnables (33) en manoeuvrant ladite interface de commande.

4. Procédé selon l'une quelconque des revendications 1 à 3,
**caractérisé en ce qu'**au moins un ordre global dit « ordre global autonome (32) » comprenant une condition d'éligibilité spécifiant que cet ordre global peut être sélectionné automatiquement, durant ladite étape d'initialisation (STP2) ledit ordinateur de bord (12) sélectionne automatiquement un ordre global autonome (32) lorsque lesdites conditions d'éligibilité de cet ordre global autonome (32) sont remplies.

5. Procédé selon l'une quelconque des revendications 1 à 4,
**caractérisé en ce que** durant ladite étape de réalisation (STP4), ledit ordinateur de bord (12) réalise chaque action en transmettant un ordre à desdits organes (20) de l'aéronef (1).

6. Procédé selon l'une quelconque des revendications 1 à 5,
**caractérisé en ce que** durant ladite étape de réalisation (STP4), ledit ordinateur de bord (12) réalise une action en affichant un descriptif de ladite action sur une interface d'information pour que ledit pilote effectue ladite action à l'aide d'une interface de commande (24), ledit ordinateur de bord (12) surveillant lesdits organes (20) pour déterminer si l'action est réalisée afin de poursuivre la séquence de commandes.

7. Procédé selon l'une quelconque des revendications 1 à 6,
**caractérisé en ce que** durant ladite étape d'activation (STP3), si ledit ordre global sélectionné (34) n'est pas faisable, ledit ordinateur de bord (12) contrôle une interface d'information (25) pour en informer un pilote.

8. Procédé selon l'une quelconque des revendications 1 à 7,
**caractérisé en ce que** durant ladite étape d'activation (STP3), si ledit ordre global sélectionné (34) n'est pas faisable, ledit ordinateur de bord (12) détermine un ordre alternatif (35) faisable et contrôle une interface d'information (25) pour signaler à un pilote ledit ordre alternatif (35), ledit ordinateur de bord (12) surveillant une interface de commande (24) pour déterminer si un pilote choisit de refuser l'ordre alternatif (35) ou de modifier l'ordre alternatif (35) ou de mettre en oeuvre cet ordre alternatif (35), ledit ordinateur de bord (12) poursuivant la séquence de commandes en cours sur la base dudit ordre alternatif en cas de validation par le pilote.

9. Procédé selon l'une quelconque des revendications 1 à 8,
**caractérisé en ce que** ledit ordinateur de bord (12) surveille une interface de commande (24) pour déterminer si un pilote requiert l'arrêt d'une séquence de commandes et dans l'affirmative met fin à cette procédure de commandes, un pilote pouvant manoeuvrer une interface de commande (24) pour arrêter une séquence de commandes à tout moment.

10. Procédé selon l'une quelconque des revendications 1 à 9,
**caractérisé en ce que** durant une phase de contrôle (STP4.4), un ordinateur de bord (12) communique avec une interface de surveillance (15) pour déterminer si une panne empêche la réalisation d'une action, et si une dite panne est détectée :
- ledit ordinateur de bord (12) contrôle une interface d'information (25) pour informer un pilote de la présence d'une telle panne,
- ledit ordinateur de bord (12) surveille au moins une interface de commande (24) pour déterminer si un pilote réalise ladite action ou choisit d'arrêter la séquence de commandes,
- si ledit pilote réalise ladite action, ledit ordinateur de bord (12) poursuit ladite séquence de commandes.

11. Procédé selon l'une quelconque des revendications 1 à 10,
**caractérisé en ce qu'**un ordre global mémorisé comportant des paramètres ajustables, durant ladite étape de préparation, des interfaces de commande (24) sont manoeuvrés par un pilote pour ajuster lesdits paramètres.

12. Procédé selon l'une quelconque des revendications 1 à 11,
**caractérisé en ce qu'**un ordre global mémorisé comporte au moins une action à choisir dans une liste comprenant une action optimisant un paramètre de mission, une action reconfigurant au moins partiellement une interface d'information d'un cockpit, une action commandant un dispositif actionnable.

13. Procédé selon l'une quelconque des revendications 1 à 12,
**caractérisé en ce que** ladite base de données (11) comporte un ordre global pour rejoindre un lieu comportant au moins une des actions suivantes :
- une action transmise à un sous-système de navigation requérant le calcul et l'affichage d'une trajectoire à suivre pour rejoindre ledit lieu,
- une action transmise à un sous-système de commande de vol (93) requérant le calcul d'une consigne de vitesse de rotation d'un rotor,
- une action transmise à un sous-système de commande de vol (93) requérant le calcul d'une consigne de positionnement d'une surface aérodynamique,
- une action transmise à un sous-système de pilotage automatique (94) pour appliquer au moins une desdites consignes de vitesse de rotation et de positionnement en contrôlant au moins un desdits actionneurs (21),
- une action transmise à une interface d'information (25) pour informer un pilote lorsqu'une trajectoire suivie n'est pas optimale.

14. Procédé selon l'une quelconque des revendications 1 à 13,
**caractérisé en ce qu'**un ordre global comprend des actions transmises à une pluralité d'interfaces d'information pour requérir l'affichage :
- des informations d'un radar en mode surveillance anticollisions (911),
- d'au moins un paramètre (915) relatif à la surveillance du véhicule,
- d'une trajectoire (916),
- des conditions météorologiques courantes (917).

15. Procédé selon l'une quelconque des revendications 1 à 14,
**caractérisé en ce qu'**un ordre global mémorisé nécessitant l'emploi de paramètres variant au cours d'un vol, ledit ordinateur de bord (12) détermine lesdits paramètres même si cet ordre global n'a pas encore été sélectionné lors de ladite étape d'initialisation (STP2).

16. Procédé selon l'une quelconque des revendications 1 à 15,
**caractérisé en ce que** l'aéronef se trouvant dans un état initial préalablement à l'étape de réalisation (STP4), suite à une interruption d'un ordre global, on propose à un individu de remettre l'aéronef dans ledit état initial.

17. Aéronef (1) muni de sous-systèmes (10), chaque sous-système (10) comprenant au moins un organe (20) à choisir dans une liste comprenant au moins : un dispositif actionnable (22) pouvant changer d'état sur requête, un actionneur (21) relié à au moins un dispositif actionnable (22) pour contrôler l'état de ce dispositif actionnable, un capteur (23) mesurant au moins un paramètre, une interface d'information (25) signalant au moins une information à un individu, une interface de commande (24) apte à générer au moins un ordre destiné à un autre organe,
**caractérisé en ce que** ledit aéronef comporte :
- une base de données (11) mémorisant une liste d'ordre global,
- un ordinateur de bord (12) relié à ladite base de données (11) et auxdits organes (20), ledit ordinateur de bord (12) comportant une unité de traitement mettant en oeuvre ledit procédé selon l'une quelconque des revendications 1 à 16.

18. Aéronef selon la revendication 17,
**caractérisé en ce que** ladite unité de traitement (16) comporte un moyen de calcul (13) et une mémoire non volatile (14), ledit moyen de calcul (13) exécutant des instructions mémorisées dans ladite mémoire non volatile (14) pour exécuter le procédé selon l'une quelconque des revendications 1 à 15.

19. Aéronef selon la revendication 17,
**caractérisé en ce que** l'aéronef comporte au moins un des sous-systèmes suivants : un sous-système d'information (91) permettant de visualiser des informations sur une planche de bord (7) et/ou dans un système de visualisation tête haute (92), un sous-système de commande de vol (93), un sous-système de pilotage automatique (94), un sous-système de navigation (95), un sous-système de radiocommunication (96), un sous-système de train d'atterrissage (97), un sous-système de phare (98), un sous-système d'observation (99) muni d'au moins une caméra (991).

## Patentansprüche

1. Verfahren zum Steuern von Untersystemen (10) eines Luftfahrzeugs (1), wobei jedes Untersystem (10) mindestens ein Element (20) aufweist, das aus einer Liste zu wählen ist, die mindestens aufweist:
eine aktivierbare Vorrichtung (22), die auf Befehl ihren Zustand ändern kann, ein Stellglied (21), das mit mindestens einer aktivierbaren Vorrichtung (22) verbunden ist, um den Zustand der aktivierbaren Vorrichtung (22) zu steuern, einen Detektor (23), der mindestens einen Parameter misst, eine Informationsschnittstelle (25), die einer Person mindestens eine Information anzeigt, eine Steuerschnittstelle (24), die mindestens ein anderes Element (20) steuern kann,
**dadurch gekennzeichnet, dass**:
- während eines Vorbereitungsschritts (STP1), der vor einer Abfolge von Befehlen am Boden oder während des Flugs durchgeführt wird, mindestens eine globale Anweisung (30) in einer Datenbank (11) gespeichert wird, wobei jede globale Anweisung (30) eine Wählbarkeitsbedingung umfasst, die mindestens eine zu realisierende Bedingung spezifiziert, um die globale Anweisung (30) auswählen zu können, wobei mindestens eine globale Anweisung (30) mindestens eine Aktivierungsbedingung umfasst, wobei jede globale Anweisung (30) eine Abfolge von Befehlen spezifiziert, die mindestens zwei Aktionen (50) umfasst, die entweder nacheinander oder parallel zueinander durch zwei verschiedene Elemente durchzuführen sind,
- während eines Initialisierungsschritts (STP2) einer Abfolge von Befehlen ein Bordrechner (12) bestimmt, ob eine gespeicherte globale Anweisung (30), genannt "ausgewählte globale Anweisung (34)", automatisch ausgewählt wird oder durch eine "Steuerhandlung" genannte Handlung, die von einer Person ausgeführt wird,
- wenn die ausgewählte globale Handlung mindestens eine Aktivierungsbedingung aufweist, ein Bordrechner (12) die Durchführbarkeit der ausgewählten globalen Anweisung (34) während eines Aktivierungsschritts (STP3) der Abfolge von Befehlen bestimmt durch Überprüfung, ob das Luftfahrzeug (1) die ausgewählte globale Anweisung (34) ausführen kann, indem er bestimmt, ob jede Aktivierungsbedingung der ausgewählten globalen Anweisung (34) erfüllt ist,
- während eines Schrittes (STP4) der Ausführung der Abfolge von Befehlen, wenn die ausgewählte globale Anweisung (34) keine Aktivierungsbedingung aufweist oder wenn jede Aktivierungsbedingung der ausgewählten globalen Anweisung erfüllt ist, der Bordrechner (12) die durch die ausgewählte globale Anweisung (34) spezifizierten Aktionen (50) ausführt.

2. Verfahren nach Anspruch 1,
**dadurch gekennzeichnet, dass** mindestens eine globale Anweisung (30) eine Wählbarkeitsbedingung spezifiziert, die angibt, dass die globale Anweisung zu jeder Zeit auswählbar ist.

3. Verfahren nach einem der Ansprüche 1 bis 2,
**dadurch gekennzeichnet, dass** während des Initialisierungsschritts (STP2):
- der Bordrechner (12) auf einer Informationsschnittstelle (25) eine Liste globaler Anweisungen anzeigt, die "auswählbare globale Anweisungen (33)" genannt werden, wobei jede auswählbare globale Anweisung (33) eine globale Anweisung ist, bei der jede Wählbarkeitsbedingung zu dem gegebenen Zeitpunkt erfüllt ist,
- der Bordrechner (12) eine Steuerschnittstelle (24) überwacht, um die ausgewählte globale Anweisung (34) zu bestimmen, die von einem Piloten aus der Liste wählbarer globaler Anweisungen (33) ausgewählt wurde, indem er die Steuerschnittstelle betätigt.

4. Verfahren nach einem der Ansprüche 1 bis 3,
**dadurch gekennzeichnet, dass** mindestens eine "autonome globale Anweisung (32)" genannte globale Anweisung eine Wählbarkeitsbedingung aufweist, die spezifiziert, dass diese globale Anweisung automatisch während des Initialisierungsschritts (STP2) ausgewählt werden kann, wobei der Bordrechner (12) automatisch eine autonome globale Anweisung (32) auswählt, wenn die Wählbarkeitsbedingungen dieser autonomen globalen Anweisung (32) erfüllt sind.

5. Verfahren nach einem der Ansprüche 1 bis 4,
**dadurch gekennzeichnet, dass** während des Ausführungsschritts (STP4) der Bordrechner (12) jede Aktion ausführt, indem er eine Anweisung an die Elemente (20) des Luftfahrzeugs (1) sendet.

6. Verfahren nach einem der Ansprüche 1 bis 5,
**dadurch gekennzeichnet, dass** während des Durchführungsschrittes (STP4) der Bordrechner (12) eine Aktion durchführt, indem er eine Beschreibung der Aktion auf einer Informationsschnittstelle anzeigt, damit der Pilot die Aktion mit der Hilfe einer Steuerschnittstelle (24) ausführt, wobei der Bordrechner (12) die Elemente (20) überwacht, um zu bestimmen, ob die Aktion ausgeführt ist, um die Abfolge von Befehlen fortzusetzen.

7. Verfahren nach einem der Ansprüche 1 bis 6,
**dadurch gekennzeichnet, dass** während des Aktivierungsschritts (STP3) der Bordrechner (12) eine Informationsschnittstelle (25) steuert, um einen Piloten zu informieren, wenn die ausgewählte globale Anweisung (34) nicht ausführbar ist.

8. Verfahren nach einem der Ansprüche 1 bis 7,
**dadurch gekennzeichnet, dass**, wenn die ausgewählte globale Anweisung (34) nicht durchführbar ist, während des Aktivierungsschrittes (STP3) der Bordrechner (12) eine alternative Anweisung (35) bestimmt, die durchführbar ist, und eine Informationsschnittstelle (25) steuert, um einem Piloten die alternative Anweisung (35) anzuzeigen, wobei der Bordrechner (12) eine Steuerschnittstelle (24) überwacht, um zu bestimmen, ob ein Pilot entschieden hat, die alternative Anweisung (35) abzulehnen, oder die alternative Anweisung (35) zu ändern, oder die alternative Anweisung (35) auszuführen, wobei der Bordrechner (12) die Abfolge laufender Befehle auf der Grundlage der alternativen Anweisung fortsetzt, wenn der Pilot dies bestätigt hat.

9. Verfahren nach einem der Ansprüche 1 bis 8,
**dadurch gekennzeichnet, dass** der Bordrechner (12) eine Steuerschnittstelle (24) überwacht, um zu bestimmen, ob ein Pilot das Anhalten einer Abfolge von Befehlen fordert, und falls dies der Fall ist, diese Befehlsausführungen beendet, wobei ein Pilot eine Steuerschnittstelle (24) betätigen kann, um jederzeit eine Abfolge von Befehlen zu stoppen.

10. Verfahren nach einem der Ansprüche 1 bis 9,
**dadurch gekennzeichnet, dass** während einer Kontrollphase (STP4.4) ein Bordrechner (12) mit einer Überwachungsschnittstelle (15) kommuniziert, um zu bestimmen, ob eine Störung die Durchführung einer Aktion verhindert, und wenn eine solche Störung erfasst wurde:
- der Bordrechner (12) eine Informationsschnittstelle (25) steuert, um einen Piloten von dem Auftreten einer solchen Störung zu informieren,
- der Bordrechner (12) mindestens eine Steuerschnittstelle (24) überwacht, um zu bestimmen, ob ein Pilot die Aktion durchführt oder entscheidet, die Abfolge von Befehlen zu stoppen,
- wenn der Pilot die Aktion ausführt, der Bordrechner (12) die Abfolge von Befehlen fortsetzt.

11. Verfahren nach einem der Ansprüche 1 bis 10,
**dadurch gekennzeichnet, dass** eine gespeicherte globale Anweisung einstellbare Parameter aufweist, und während des Vorbereitungsschritts Steuerschnittstellen (24) von einem Piloten betätigt werden, um diese Parameter einzustellen.

12. Verfahren nach einem der Ansprüche 1 bis 11,
**dadurch gekennzeichnet, dass** eine gespeicherte globale Anweisung mindestens eine Aktion aufweist, die aus einer Liste auszuwählen ist, die eine Aktion umfasst, die einen Arbeitsparameter optimiert, eine Aktion, die mindestens teilweise eine Informationsschnittstelle eines Cockpits rekonfiguriert, eine Aktion, die eine betätigbare Vorrichtung steuert.

13. Verfahren nach einem der Ansprüche 1 bis 12,
**dadurch gekennzeichnet, dass** die Datenbank (11) eine globale Anweisung aufweist, an eine Stelle zu gelangen mit mindestens einer der folgenden Aktionen:
- einer Aktion, die an ein Navigations-Untersystem übertragen wird, das die Berechnung und Anzeige einer zu folgenden Flugbahn zur Erreichung des Orts fordert,
- einer Aktion, die an ein Flugbefehls-Untersystem (93) übertragen wird, welches die Berechnung eines Drehzahl-Sollwertes eines Rotors fordert,
- einer Aktion, die an ein Flugbefehls-Untersystem (93) übertragen wird, das die Berechnung eines Positions-Sollwertes einer aerodynamischen Fläche fordert,
- einer Aktion, die an ein Autopilot-Untersystem (94) übertragen wird, um den Drehgeschwindigkeits-Sollwert und/oder den Positionierungs-Sollwert anzuwenden durch Steuern mindestens eines der Stellglieder (21),
- einer Aktion, die an eine Informationsschnittstelle (25) übertragen wird, um einen Piloten zu informieren, wenn eine verfolgte Flugbahn nicht optimal ist.

14. Verfahren nach einem der Ansprüche 1 bis 13,
**dadurch gekennzeichnet, dass** eine globale Anweisung Aktionen aufweist, die an eine Mehrzahl von Informationsschnittstellen übertragen wird, um die Anzeige von
- Informationen eines Radars im Antikollisions-Überwachungsmodus (911),
- mindestens eines Parameters (915) bezüglich der Überwachung des Fahrzeugs,
- einer Flugbahn (916),
- aktueller meteorologischer Bedingungen (917),
zu fordern.

15. Verfahren nach einem der Ansprüche 1 bis 14,
**dadurch gekennzeichnet, dass**, wenn eine gespeicherte globale Anweisung die Anwendung von Parametern erfordert, die sich während eines Fluges ändern, der Bordrechner (12) diese Parameter bestimmt, selbst wenn diese globale Anweisung während des Initialisierungsschrittes (STP2) noch nicht ausgewählt wurde.

16. Verfahren nach einem der Ansprüche 1 bis 15,
**dadurch gekennzeichnet, dass**, wenn das Luftfahrzeug sich in einem ursprünglichen Zustand vor dem Realisierungsschritt (STP4) nach einer Unterbrechung einer globalen Anweisung befindet, einer Person vorgeschlagen wird, das Luftfahrzeug in den ursprünglichen Zustand zurückzuversetzen.

17. Luftfahrzeug (1) mit Untersystemen (10), wobei jedes Untersystem (10) mindestens ein Element (20) aufweist, das aus einer Liste auszuwählen ist, die mindestens aufweist: eine betätigbare Vorrichtung (22), die ihren Zustand auf Anfrage ändern kann, ein Stellglied (21), das mit der mindestens einen betätigbaren Vorrichtung (22) verbunden ist, um den Zustand dieser betätigbaren Vorrichtung zu steuern, einen Detektor (23), der mindestens einen Parameter misst, eine Informationsschnittstelle (25), die mindestens eine Information an eine Person signalisiert, eine Steuerschnittstelle (24), die mindestens einen Befehl erzeugen kann, der an ein anderes Element gerichtet ist,
**dadurch gekennzeichnet, dass** das Luftfahrzeug aufweist:
- eine Datenbank (11), die eine Liste globaler Anweisungen speichert,
- einen Bordrechner (12), der mit der Datenbank (11) und mit den Elementen (20) verbunden ist, wobei der Bordrechner (12) eine Bearbeitungseinheit aufweist, die das Verfahren nach einem der Ansprüche 1 bis 16 ausführt.

18. Luftfahrzeug nach Anspruch 17,
**dadurch gekennzeichnet, dass** die Verarbeitungseinheit (16) ein Rechenmittel (13) und einen nichtflüchtigen Speicher (14) aufweist, wobei das Rechenmittel (13) Instruktionen ausführt, die in dem nichtflüchtigen Speicher (14) gespeichert sind, um das Verfahren nach einem der Ansprüche 1 bis 15 auszuführen.

19. Luftfahrzeug nach Anspruch 17,
**dadurch gekennzeichnet, dass** das Luftfahrzeug mindestens eines der folgenden Untersysteme aufweist: ein Informations-Untersystem (91), das es erlaubt, Informationen auf einer Armaturentafel (7) und/oder in einem Head-Up-Anzeigesystem (92) anzuzeigen, ein Flugsteuerungs-Untersystem (93), ein Autopilot-Untersystem (94), ein Navigations-Untersystem (95), ein Funkkommunikations-Untersystem (96), ein Landegestell-Untersystem (97), ein Scheinwerfer-Untersystem (98), ein Beobachtungs-Untersystem (99), welches mit mindestens einer Kamera (991) versehen ist.

## Claims

1. Method for controlling subsystems (10) of an aircraft (1), each subsystem (10) comprising at least one member (20) to be chosen from a list comprising at least: an actuatable device (22) which can change state on request, an actuator (21) connected to at least one actuatable device (22) for controlling the state of this actuatable device (22), a sensor (23) measuring at least one parameter, an information interface (25) signalling at least one item of information to a person, a control interface (24) suitable for controlling at least one other member (20),
**characterised in that**:
- during a preparation step (STP1) implemented on the ground or in flight prior to a control sequence, at least one global order (30) is stored in a database (11), each global order (30) including an eligibility condition specifying at least one condition to be implemented in order to be able to select said global order (30), at least one global order (30) including at least one activation condition, each global order (30) specifying a control sequence comprising at least two actions (50) to be implemented either sequentially or in parallel by two different members,
- during an initialisation step (STP2) of a control sequence, an onboard computer (12) determines whether a stored global order (30), referred to as "selected global order (34)", is selected automatically or by an act referred to as "pilot act" implemented by a person,
- if said selected global order comprises at least one activation condition, during an activation step (STP3) of the control sequence, an onboard computer (12) determines the feasibility of said selected global order (34) by verifying that the aircraft (1) can implement said selected global order (34) by determining whether each activation condition of said selected global order (34) is satisfied,
- during an implementation step (STP4) of the control sequence, if said selected global order (34) does not have an activation condition or if each activation condition of said selected global order is satisfied, said onboard computer (12) implements said actions (50) specified by said selected global order (34).

2. Method according to claim 1,
**characterised in that** at least one global order (30) specifies an eligibility condition indicating that the global order is selectable at any moment.

3. Method according to any one of claims 1 to 2,
**characterised in that** during said initialisation step (STP2):
- said onboard computer (12) displays on an information interface (25) a list of global orders which can be selected at a given instant, referred to as "selectable global orders (33)", each selectable global order (33) being a global order for which each eligibility condition is satisfied at said given instant,
- said onboard computer (12) monitors a control interface (24) to determine said selected global order (34) chosen by a pilot from the list of selectable global orders (33) by manoeuvring said control interface.

4. Method according to any one of claims 1 to 3,
**characterised in that** at least one global order referred to as "autonomous global order (32)" comprising an eligibility condition specifying that this global order can be selected automatically, during said initialisation step (STP2) said onboard computer (12) automatically selects an autonomous global order (32) when said eligibility conditions of this autonomous global order (32) are satisfied.

5. Method according to any one of claims 1 to 4,
**characterised in that** during said implementation step (STP4), said onboard computer (12) implements each action by transmitting an order to said members (20) of the aircraft (1).

6. Method according to any one of claims 1 to 5,
**characterised in that** during said implementation step (STP4), said onboard computer (12) implements an action by displaying a description of said action on an information interface so that said pilot carries out said action with the aid of a control interface (24), said onboard computer (12) monitoring said members (20) to determine whether the action is implemented in order to continue the control sequence.

7. Method according to any one of claims 1 to 6,
**characterised in that** during said activation step (STP3), if said selected global order (34) is not feasible, said onboard computer (12) controls an information interface (25) in order to inform a pilot about this.

8. Method according to any one of claims 1 to 7,
**characterised in that** during said activation step (STP3), if said selected global order (34) is not feasible, said onboard computer (12) determines an alternative order (35) that is feasible and controls an information interface (25) in order to signal to a pilot said alternative order (35), said onboard computer (12) monitoring a control interface (24) in order to determine whether a pilot choses to refuse the alternative order (35) or to modify the alternative order (35) or to carry out this alternative order (35), said onboard computer (12) continuing with the current control sequence on the basis of said alternative order in the event of validation by the pilot.

9. Method according to any one of claims 1 to 8,
**characterised in that** said onboard computer (12) monitors a control interface (24) in order to determine whether a pilot requests the stoppage of a control sequence, and if so, ends this control procedure, a pilot being capable of operating a control interface (24) in order to stop a control sequence at any moment.

10. Method according to any one of claims 1 to 9,
**characterised in that** during a checking phase (STP4.4), an onboard computer (12) communicates with a monitoring interface (15) in order to determine whether a failure prevents the implementation of an action, and if a said failure is detected:
- said onboard computer (12) controls an information interface (25) in order to inform a pilot of the presence of such a failure,
- said onboard computer (12) monitors at least one control interface (24) in order to determine whether a pilot implements said action or chooses to stop the control sequence,
- if said pilot implements said action, said onboard computer (12) continues said control sequence.

11. Method according to any one of claims 1 to 10,
**characterised in that** a stored global order comprising adjustable parameters, during said preparation step, control interfaces (24) are operated by a pilot in order to adjust said parameters.

12. Method according to any one of claims 1 to 11,
**characterised in that** a stored global order comprises at least one action to be chosen from a list comprising an action optimising a mission parameter, an action reconfiguring at least partially an information interface of a cockpit, an action controlling an actuatable device.

13. Method according to any one of claims 1 to 12,
**characterised in that** said database (11) comprises a global order for reaching a location comprising at least one of the following actions:
- an action transmitted to a navigation subsystem requesting the calculation and the display of a trajectory to be followed in order to reach said location,
- an action transmitted to a flight control subsystem (93) requesting the calculation of a reference speed of rotation of a rotor,
- an action transmitted to a flight control subsystem (93) requesting the calculation of a reference positioning of an aerodynamic surface,
- an action transmitted to an autopilot subsystem (94) to apply at least one of said reference speed of rotation and of said reference positioning by controlling at least one of said actuators (21),
- an action transmitted to an information interface (25) to inform a pilot when a trajectory followed is not optimal.

14. Method according to any one of claims 1 to 13,
**characterised in that** a global order comprises actions transmitted to a plurality of information interfaces to request the display:
- of information from a radar in anti-collision monitoring mode (911),
- of at least one parameter (915) relating to the monitoring of the vehicle,
- of a trajectory (916),
- of current meteorological conditions (917).

15. Method according to any one of claims 1 to 14,
**characterised in that** a stored global order requiring the use of parameters varying during a flight, said onboard computer (12) determines said parameters even if this global order has not yet been selected during said initialisation step (STP2).

16. Method according to any one of claims 1 to 15,
**characterised in that** the aircraft being in an initial state prior to the implementation step (STP4), owing to an interruption of a global order, a person is given the option of restoring the aircraft to said initial state.

17. Aircraft (1) provided with subsystems (10), each subsystem (10) comprising at least one member (20) to be chosen from a list comprising at least: an actuatable device (22) which can change state on request, an actuator (21) connected to at least one actuatable device (22) for checking the state of this actuatable device, a sensor (23) measuring at least one parameter, an information interface (25) signalling at least one item of information to a person, a control interface (24) suitable for generating at least one order intended for another member,
**characterised in that** said aircraft comprises:
- a database (11) storing a global order list,
- an onboard computer (12) connected to said database (11) and to said members (20), said onboard computer (12) comprising a processing unit carrying out said method according to any one of claims 1 to 16.

18. Aircraft according to claim 17,
**characterised in that** said processing unit (16) comprises a calculation means (13) and a non-volatile memory (14), said calculation means (13) executing instructions stored in said non-volatile memory (14) in order to execute the method according to any one of claims 1 to 15.

19. Aircraft according to claim 17,
**characterised in that** the aircraft comprises at least one of the following subsystems: an information subsystem (91) making it possible to display information on an instrument panel (7) and/or in a head-up display system (92), a flight control subsystem (93), an autopilot subsystem (94), a navigation subsystem (95), a radio communications subsystem (96), a landing gear subsystem (97), a search light subsystem (98), an observation subsystem (99) provided with at least one camera (991).
